# EUROPÄISCHE PATENTSCHRIFT

(11) **EP 1 382 160 B1**
(45) Veröffentlichungstag und Bekanntmachung des Hinweises auf die Patenterteilung: **19.01.2005**
(21) Anmeldenummer: 02727574.2
(22) Anmeldetag: 22.04.2002
(51) Int. Cl.: H04L 12/28

(54) **VERFAHREN ZUM ZUGREIFEN VON STATIONEN AUF EIN GEMEINSAMES ÜBERTRAGUNGSMEDIUM SOWIE EINE NETZSTATION ZUM DURCHFÜHREN EINES SOLCHEN VERFAHRENS**
METHOD FOR STATIONS ACCESSING A COMMON TRANSFER MEDIUM AND NETWORK STATION FOR CARRYING OUT SAID METHOD
PROCEDE PERMETTANT L'ACCES DES STATIONS A UN MOYEN DE TRANSMISSION COMMUN ET STATION DE RESEAU PERMETTANT L'APPLICATION DUDIT PROCEDE

(30) Priorität: 24.04.2001 DE 10120975; 24.04.2001 EP 01109950
(43) Veröffentlichungstag der Anmeldung: 21.01.2004
(73) Patentinhaber: SIEMENS AKTIENGESELLSCHAFT, 80333 München (DE)
(72) Erfinder: BING, Torsten, 80807 München (DE); BOLINTH, Edgar, 41189 Mönchengladbach (DE); KADELKA, Arndt, 50674 Köln (DE); KRÄMLING, Andreas, 52072 Aachen (DE); LOTT, Matthias, 82061 Neuried (DE); SCHULZ, Egon, 80993 München (DE); WEGMANN, Bernhard, 83607 Holzkirchen (DE)
(86) Internationale Anmeldenummer: PCT/EP2002/004421
(87) Internationale Veröffentlichungsnummer: WO 2002/087163

(56) Entgegenhaltungen:
- EP-A- 0 767 548
- WO-A-00/60893
- GB-A- 2 350 026
- US-A- 5 901 362
- US-A- 5 912 885

## Beschreibung

Die Erfindung bezieht sich auf ein Verfahren zum Zugreifen von Stationen auf ein gemeinsames Übertragungsmedium mit den oberbegrifflichen Merkmalen des Patentanspruchs 1 bzw. eine Netzstation zum Durchführen eines solchen Verfahrens.

Bei Kommunikationssystemen wie dem GSM (Global System for Mobile Communication), dem UMTS (Universal Mobile Telecommunication System) oder dem HiperLAN (LAN: Local Area Network) kommunizieren mobile Stationen mit netzseitigen Stationen über Funkschnittstellen. Die Funkschnittstellen können dabei von einer Vielzahl von mobilen Stationen parallel oder zugleich verwendet werden. Der Zugriff von Stationen auf ein solches gemeinsames Übertragungsmedium wird durch Vielfachzugriffsverfahren (Multiple Access, MA) ermöglicht. Dabei wird unterschieden, ob das Medium im Zeitbereich (Time Division Multiple Access, TDMA), im Frequenzbereich (Frequency Division Multiple Access, FDMA), im Codebereich (Code Division Multiple Access, CDMA) oder Raumbereich (Space Division Multiple Access, SDMA) zwischen den Stationen aufgeteilt wird. Dabei findet häufig, z.B. bei GSM, TETRA (Trans-European-Trunked-Radio), DECT (Digital European Cordless Telecommunications), eine Unterteilung des Mediums in Frequenz- und/oder Zeitkanäle statt. Bei dezentral koordinierten Systemen wird anhand von Messungen über die Verwendbarkeit eines Kanals entschieden. Entsprechend der Funkausbreitung ist eine Wiederverwendung eines Kanals z.B. in einem entsprechenden räumlichen Abstand möglich.

Zukünftige Funksysteme sollen eine Vielzahl von unterschiedlichen Diensten gleichzeitig unterstützen. Dabei unterscheiden sich die Dienste z.B. durch unterschiedliche Übertragungsanforderungen, z.B. Verzögerung oder Fehlerrate, und Ankunftsprozesse. Der Netzbetreiber hat das Ziel, dass die beim Verbindungsaufbau vereinbarte Dienstgüte eingehalten und das zur Verfügung stehende Spektrum möglichst effizient genutzt wird.

In dezentral koordinierten Kommunikationssystemen, deren Kanalvergabe auf Messungen der Funkkanäle beruht, kommt es vor, dass eine Station Übertragungskapazität für eine Verbindung benötigt, diese Übertragungskapazität aber nicht zur Verfügung steht, da die Stationen in der Umgebung diese Kapazität bzw. den entsprechenden Kanal belegt haben. Dies führt dazu, dass entweder der Verbindungswunsch abgelehnt werden muss oder die vereinbarte Dienstgüte bereits bestehender Verbindungen nicht eingehalten werden kann. Bei Kommunikationssystemen mit Link Adaptation, z.B. EDGE/EGPRS (Enhanced Data Rates for GSM Evolution/Enhanced General Packet Radio Service) kann durch Belegung eines Kanals von einer Nachbarstation ein Wechsel der Modulation/Codierung notwendig werden und so die verfügbare Datenrate reduziert werden, wodurch bestehende Verbindungen beeinträchtigt werden.

Insbesondere wird es beim gleichzeitigen Betrieb von Verbindungen mit unterschiedlichen Dienstgüteanforderungen vorkommen, dass für Datendienste mit geringen Anforderungen, z.B. Dateiübertragungen (FTP/File Transfer Protocol-Download), beim Verbindungsaufbau mehr Übertragungskapazität benötigt und belegt wird, als zur Einhaltung der vom Benutzer geforderten Dienstgüte erforderlich ist, wenn diese gerade zur Verfügung steht, z.B. die Übertragung einer Datei durchgeführt wird. Die entsprechende Kapazität steht dann bei den Nachbarstationen nicht mehr zur Verfügung und Verbindungswünsche müssen abgelehnt werden.

Es besteht also das Problem, die vorhandene Übertragungskapazität möglichst effizient auf dezentral organisierte Funkzellen zu verteilen, wobei einerseits die Kapazität möglichst vollständig genutzt werden soll, auch wenn dies zu einer Übererfüllung der geforderten Dienstgüte führt, und andererseits die nicht unbedingt benötigte Kapazität bei Bedarf anderen Funkzellen zur Verfügung gestellt werden kann.

Dieses Problem tritt bei Systemen auf, bei denen sich Dienste mit unterschiedlichen Dienstegüteanforderungen das gemeinsame Funkmedium teilen und bei denen eine dezentral organisierte, messende dynamische Kanalvergabe verwendet wird. Dabei ist die Art des Kanals, z.B. Zeit- oder/und Frequenzkanal, prinzipiell nicht entscheidend. Derzeit bestehen verschiedene Systeme dieser Art:

Bei dem Standard IEEE 802.11 gibt es einen zentral und einen dezentral gesteuerten Modus. Bei der dezentralen Steuerung (Distributed Coordination Function (DCF)) sind alle Stationen gleichberechtigt und eine Priorisierung der Dienste wird nicht unterstützt. Bei der zentralen Steuerung (Point Coordination Function (PCF)) wird der Zugriff der einzelnen Stationen einer Funkzelle durch eine zentrale Station als Zugriffspunkt (Access Point, AP) gesteuert, wobei mehrere Zugriffspunkte über ein verteiltes System (Distributed System, DS) verbunden sind. Können die Zugriffspunkte nicht miteinander kommunizieren, z.B. falls die zentrale Steuerung (PCF) von einer Station ohne Zugang zu einem Verteilungs- bzw. Distribution System (DS) verwendet wird, um in einem Ad-hoc-Modus eine bestimmte Dienstgüte zu unterstützen, so wird das beschriebene Problem nicht gelöst. Beim dezentralen Zugriff könnte mittels einer Priorität, die u.a. entsprechend der Anforderungen der Dienstklasse festgelegt wird, die Übertragung eines einzelnen Pakets gesteuert werden. Dieses wird derzeit aber nicht vom Standard unterstützt.

Bei dem sich in der Standardisierung für Datennetze befindlichen System HIPERLAN/2 verwaltet eine Basisstation (Access Point, AP) den Zugriff der bei ihr angemeldeten schnurlosen Stationen (wireless Terminal, WT) auf das gemeinsame Medium. Mehrere Basisstationen können durch eine übergeordnete Instanz (Access Point Controller (APC)) koordiniert werden. Vom Standard wird nur innerhalb des Bereiches eines Zugriffspunkts eine zentrale Verwaltung der Übertragungskapazität berücksichtigt. Hat ein Zugriffspunkt keine Verbindung zum Festnetz, dann wird der Zugriffspunkt als zentrale Steuereinrichtung (Central Controller (CC)) bezeichnet.

Die Aufgabe der Erfindung besteht darin, bei einem Verfahren zum Zugreifen von Stationen auf ein gemeinsames Übertragungsmedium mittels eines Vielfachzugriffsverfahren die vorhandene Übertragungskapazität möglichst effizient zu verteilen, bzw. eine Station zum Durchführen eines solchen Verfahrens vorzuschlagen.

Diese Aufgabe wird durch ein Verfahren zum Zugreifen von Stationen auf ein gemeinsames Übertragungsmedium mit den Merkmalen des Patentanspruchs 1 bzw. eine Station zum Durchführen eines solchen Verfahrens mit den Merkmalen des Patentanspruchs 10 gelöst.

Vorteilhafte Ausgestaltungen sind Gegenstand von abhängigen Patentansprüchen.

Vorteilhafterweise informieren Stationen, die sich mit anderen Stationen ein gemeinsames Übertragungsmedium teilen, diese bei Bedarf durch das Versenden von Nachrichten über die Funkschnittstelle oder über, z.B. in H2GF, definierte Schnittstellen zwischen den netzseitigen Stationen oder Zugriffspunkten über ihre Kapazitätsbedürfnisse. Die versendeten Nachrichten können dabei Informationen über die Priorität und den Kapazitätsbedarf enthalten. Stationen, welche die versendeten Kapazitätsanforderungen empfangen, geben nicht benötigte oder nicht dringend benötigte Übertragungskapazität frei, so dass diese von der bedürftigen Station verwendet werden kann. Die entsprechenden Informationen können auch über andere Stationen weitergeleitet werden, z.B. über mehrere "Hops".

Vorteilhaft ist insbesondere auch ein Verfahren, bei dem die Informationen durch ein einfach zu detektierendes Signal, insbesondere einen Energieimpuls, ausgetauscht werden. Das einfach zu detektierende Signal kann zweckmäßigerweise von anderen Systemen ausgewertet werden, insbesondere mit anderem Codierverfahren, anderem Code, anderem Modulationsverfahren, anderer Bandbreite und/oder anderem Frequenzband. Dabei können auch Unterscheidungsgrößen herangezogen werden, anhand der zwischen Stationen verschiedener Netzbetreiber unterschieden wird.

Ausführungsbeispiele werden nachfolgend anhand der Zeichnung näher erläutert. Es zeigen:
- FIG 1: schematisch eine Anordnung von Funkzellen, in denen sich Stationen ein gemeinsames Übertragungsmedium teilen, gemäß einem ersten Ausführungsbeispiel,
- FIG 2: schematisch eine Anordnung gemäß einem zweiten Ausführungsbeispiel und
- FIG 3: ein schematisches Diagramm zur Veranschaulichung eines beispielhaften Ablaufs.

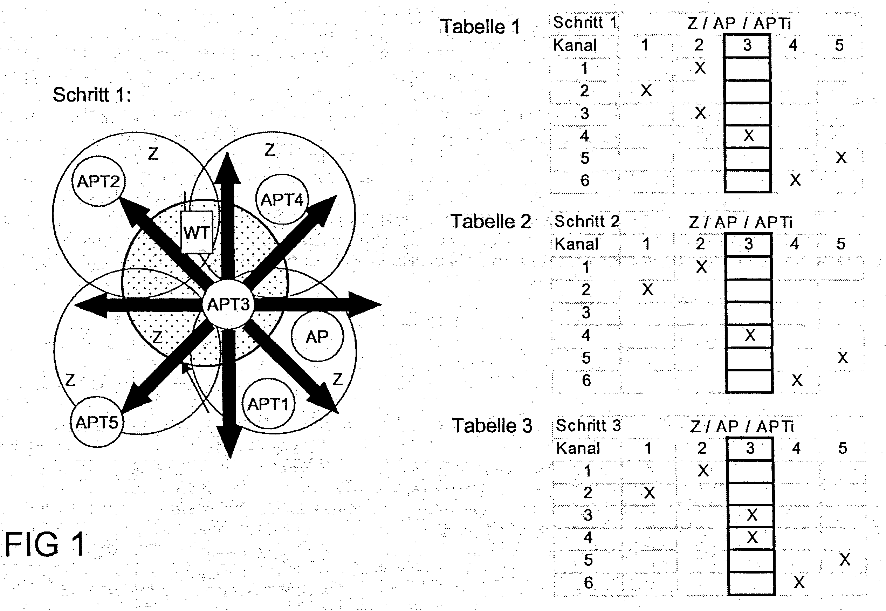

Wie aus FIG 1 ersichtlich, besteht ein beispielhaftes FunkKommunikationssystem aus einer oder, wie dargestellt mehreren Funkzellen Z, die sich vorteilhafterweise teilweise überlappen. Innerhalb dieser Funkzellen Z befindet sich netzseitig jeweils eine Basisstationen bzw. ein Zugriffspunkt AP, die den Funkverkehr innerhalb der entsprechenden Funkzelle Z koordinieren. Die Funkschnittstelle zwischen solchen netzseitigen Stationen AP, APT und stationären oder mobilen Stationen bzw. drahtlos angekoppelten Terminals WT eines Teilnehmers wird über Sende- und Empfangseinrichtungen aufgebaut. Diese Sende- und Empfangseinrichtungen sind Bestandteil der Basisstationen bzw. Zugriffspunkte AP oder mit diesen gekoppelt. Insbesondere können sie auch Bestandteil von Zugriffspunktterminals APTi, APTj, APTk mit (i, j, k = 1,2,3... ) sein, von denen mehrere als Unterstationen der Zugriffspunkte AP in einer Zelle Z oder Gruppe von Zellen Z angeordnet sein können.

Bei den Ausführungsbeispielen koordiniert eine zentrale netzseitige Station, z.B. die Zugriffsstation AP, die Übertragung in ihrer Umgebung bzw. ihrem Einflussbereich, in dem sie z.B. den von ihr bedienten stationären oder mobilen Stationen bzw. Terminals WT Übertragungskapazität zuweist. Wenn die zentrale netzseitige Station AP mehr Übertragungskapazität benötigt, als sie momentan belegt hat, und keine freien Kanäle zur Verfügung stehen, so informiert sie die netzseitigen Stationen APi, APj, APk (i, j, k = 1,2,3,...) in ihrer Umgebung über die fehlende Übertragungskapazität durch Versenden einer entsprechenden Nachricht über die Funkschnittstelle.

Dabei kann diese Nachricht so übertragen werden, dass sie leicht detektierbar ist, z.B. in Form einer Synchronisationssequenz, und/oder Aufschluss über die Priorität der Anforderungen und die benötigte Übertragungskapazität ermöglicht. Einfache Nachrichten erfordern somit keine Decodierung sondern brauchen nur detektiert zu werden. Die Nachricht kann auch weitere Parameter enthalten, die dann eine Decodierung an der empfangenden Station erfordert.

Andere netzseitige Stationen Api, Apj, APk, insbesondere zentrale Stationen, die diese Nachricht empfangen, geben nicht dringend benötigte Übertragungskapazität, d.h. insbesondere Kanäle, die für Dienste mit geringen Anforderungen, z.B. für sogenannte "best effort"-Dienste, verwendet werden, frei oder weichen ggf. auf einen anderen Kanal aus, so dass dieser der bedürftigen Station AP zur Verfügung steht.

Um die Reichweite der Nachricht zu erhöhen, kann diese gemäß besonders bevorzugter Ausführungsform auch von anderen Stationen, z.B. von funkgestützten netzseitigen oder mobilen Terminals WTs, die von der zentralen Station AP bedient werden, weitergeleitet werden.

Bei dem ersten Ausführungsbeispiel werden, wie aus der Tabelle 1 in FIG 1 ersichtlich, bei dem derzeit standardisierten Funkzugangssystem HIPERLAN/2 (H/2) die Funkressourcen in Form von Frequenzkanälen 1 - 6 an die netzseitigen Basisstationen bzw. Zugriffspunkte AP (Access Point) vergeben. Ein Zugriffspunkt AP setzt sich dabei aus einer oder mehreren Sendeeinheiten APT (Access Point Transceiver) und einer Steuereinrichtung APC (Access Point Controller) zusammen. Die Zuordnung kann entsprechend auch zu Zellen Z oder Zugangspunktterminals APT erfolgen. Innerhalb des Bereiches einer netzseitigen Steuereinrichtung APC kann die Kanalvergabe zentral koordiniert erfolgen. Zwischen verschiedenen APCs ist derzeit keine Kommunikation zur Koordinierung der Frequenzvergabe vorgesehen.

Jede Sendeeinheit bzw. jeder Zugriffspunkt APT belegt gemäß dynamischer Frequenzauswahl DFS (Dynamic Frequency Selection) einen Frequenzkanal, der zur Erzielung einer geringen Störleistung einen möglichst großen Wiederverwendungsabstand aufweist.

Die dem momentanen Bedarf entsprechende Kapazitätszuweisung der Teilnehmer erfolgt dynamisch durch Zuteilung von Zeitschlitzen innerhalb des Mediumszugriffs-Steuerrahmens bzw. MAC-Rahmens (MAC: Media Access Control). Um auch bei ungünstigen Übertragungsbedingungen die erforderliche Dienstgüte zu erhalten, wird z.B. eine adaptive Modulation/Codierung, für sich genommen z.B. als Link Adaptation bekannt, eingesetzt. Das bedeutet, dass bei schlechteren Kanaleigenschaften eine höhere Codierung und/oder eine geringwertigere Modulation verwendet wird, wodurch allerdings die verfügbare Datenrate reduziert wird. Um die verfügbare Datenrate zu erhöhen, muss die Interferenz des Funkkanals reduziert werden.

Wenn der betroffene Zugriffspunkt AP nicht auf einen anderen Frequenzkanal ausweichen kann, so wird eine Nachricht an die Zellen mit gleichem verwendeten Kanal bzw. Gleichkanalzellen übertragen, wobei die Nachricht den Mangel an Kapazität anzeigt. Für die Zugriffspunkte AP, die diese Nachricht empfangen, gibt es verschiedene Möglichkeiten zur Unterstützung des betroffenen Zugriffspunkts AP.

Als eine erste Möglichkeit kann auf einen anderen Frequenzkanal ausgewichen werden. Da die Interferenz reduziert wird, kann der betroffene Zugriffspunkt AP eine höherwertigere Modulation einsetzen.

Möglich ist auch, Übertragungen auf das zur Einhaltung der Dienstverträge, beispielsweise die sogenannte Quality of Service (QoS), notwendige reduzieren. Gegebenenfalls kann auch in eine niedrigratigeren physikalische Betriebsart (PHY-Mode) geschaltet und dadurch die Sendeleistung reduziert werden. Bei Einsatz geeigneter Algorithmen zur Verbindungsanpassung (Link Adaptation) kann ebenfalls die Datenrate erhöht werden.

Gemäß einer anderen Ausführungsform können bei Systemen, die Kanäle durch eine Kombination aus Frequenzduplex- und Zeitduplex-Mehrfachzugriff (FDMA/TDMA) erzeugen und bei denen die Zuordnung von Kanalkapazität durch das Belegen/die Freigabe einzelner Kanäle geschieht, benachbarte Basisstationen zur Freigabe belegter Kanäle angeregt werden.

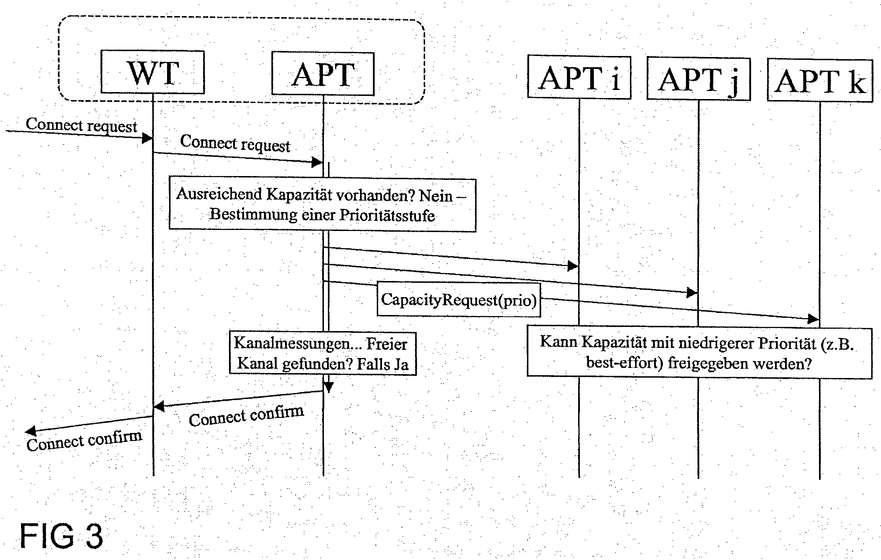

Eine erste Ausführungsform ist in der FIG 1 dargestellt, wobei der Ablauf der FIG 3 entnehmbar ist. Nach einer Verbindungsanforderung (Connect request) durch den Teilnehmer fordert dessen Station WT beim Zugriffpunktterminal APT3, mit dem sie gerade kommuniziert, einen Kanal für zusätzliche Übertragungskapazität an. Jedoch ist hier z.B. kein Kanal frei belegbar, da alle Kanäle bestimmten Basisstationen bzw. Zugriffspunkten oder Zellen zugeordnet sind, wie dies auch der Tabelle 1 aus FIG 1 entnehmbar ist.

Netzseitig wird bestimmt, ob ausreichend Übertragungskapazität vorhanden ist, um der anfordernden Station WT einen entsprechenden Kanal zuzuweisen. Da dies hier nicht der Fall ist, sendet das Zugriffspunktterminal APT3 eine Kapazitätsanforderung (Capacity request(prio)) an die benachbarten Zugriffspunktterminals APTi, APTj, APTk (i = 1, 2, 4, 5). Die Kapazitätsanforderung (Capacity request(prio)) enthält vorteilhafterweise auch eine Prioritätsangabe prio, anhand der das empfangende Zugriffspunktterminal APTi, APTj, APTk die Dringlichkeit oder die Dienstgüte der Anforderung bestimmen kann.

In den empfangenden Zugriffspunktterminals APTi, APTj, APTk wird nun bestimmt, ob diese in der Lage sind, eine entsprechende Übertragungskapazität frei zu geben. Falls ja, z.B. beim Zugriffspunktterminals APT2, wird dies durchgeführt, wobei hier z.B. der Kanal 3, wie in Tabelle 2 in FIG 1 dargestellt, freigegeben wird.

Das Übertragungskapazität anfordernde Zugriffspunktterminal APT3 bzw. der Zugriffspunkt AP überwacht fortlaufend den Kapazitätszustand auf der Funkschnittstelle. Sobald es einen freien bzw. frei gewordenen Kanal findet, hier Kanal 3, der den geforderten Bedingungen genügt, sendet es eine Verbindungsbestätigung (Connect confirm) an die anfordernde Station WT. Diese bestätigt die Verbindungsmöglichkeit wiederum der anfordernden Funktion oder Einrichtung. Der freigewordene Kanal 3 wird somit von dem Zugriffspunktterminal APT3 belegt, wie es in der Tabelle 3 der FIG 1 dargestellt ist.

Optional kann von den Zugriffspunktterminals APTi, APTj, APTk auch eine entsprechende Mitteilung über Freigabe und/oder Nicht-Freigabe an das anfragende Zugriffspunktterminal APT gesendet werden. Dieses muss dann nicht fortlaufend eine Überwachung der Funkschnittstelle vornehmen.

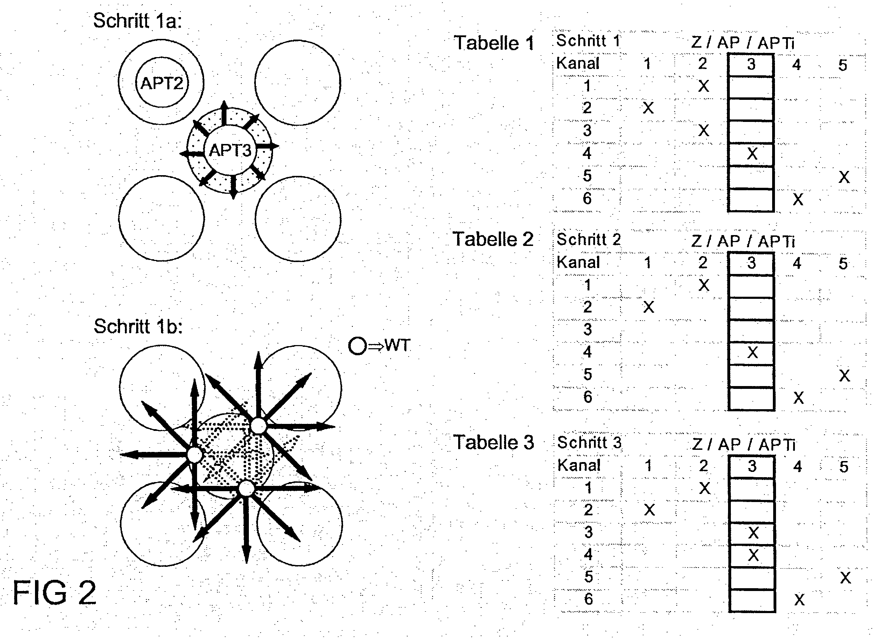

Aus der FIG 2 ist eine Ausführungsform ersichtlich, bei der eine Weiterleitung vorgenommen wird. Auf die Anforderung von Übertragungskapazität durch das Zugriffspunktterminal APT3 - Schritt 1a - reagiert jedoch keines der anderen Zugriffspunktterminals APTi, da sich die Zellen Z nicht in ausreichendem Maße überlappen.

In einem weiteren Schritt 1b wird die Information daher von den stationären und mobilen Stationen bzw. Terminals WT weitergeleitet, die sich im entsprechenden Bereich befinden und in dem unteren Bild der FIG 2 als Kreise im Randbereich der Zelle skizziert sind. Im vorliegenden Beispiel der Tabelle 2 in FIG 2 kann das Zugriffspunktterminal APT2 auf die Anforderung Übertragungskapazität freigeben, z.B. den Kanal 3. Die Basisstation bzw. das ursprünglich Kapazität anfordernde Zugriffspunktterminals APT3 erkennt dies und belegt gemäß Tabelle 3 in FIG 2 Kanal 3 wieder wie beim vorstehenden Ausführungsbeispiel.

Beide Ausführungsformen ermöglichen somit eine variable Kanalzuweisung, bei der eine Verwendung des gleichen Kanals durch zwei benachbarte Zellen bzw. Basisstationen vermieden wird und trotzdem eine optimierte Ausnutzung der verfügbaren Kanäle ermöglicht wird.

## Patentansprüche

1. Verfahren zum Zugreifen von Stationen (WT, AP, APTi) auf ein gemeinsames Übertragungsmedium in einem FunkKommunikationssystem, wobei sich die Stationen (WT, AP, APTi) mit anderen Stationen das gemeinsame Übertragungsmedium teilen, **dadurch gekennzeichnet, daß** eine der Stationen (WT, AP, APTi) bei Bedarf durch das Versenden von zumindest einer Information zumindest eine benachbarte Station außerhalb der eigenen Zelle (Z) über ihre Kapazitätsbedürfnisse informiert.

2. Verfahren nach Anspruch 1, bei dem
die Information von Stationen (WT, AP, APTi) empfangen und/oder weitergeleitet wird, die als teilnehmerseitige Stationen (WT) oder netzseitige Stationen (AP, APT) ausgebildet sind.

3. Verfahren nach Anspruch 1 oder 2, bei dem
eine Station (APT2) mit freigebbarer Kapazität einen Übertragungskanal freigibt.

4. Verfahren nach einem vorstehenden Anspruch, bei dem
eine Kapazität anfordernde Station (APT3) fortwährend den Kapazitätszustand auf dem Übertragungsmedium überwacht und/oder eine Kapazitätsfreigabe von der freigebenden Station (APT2) mitgeteilt bekommt.

5. Verfahren nach einem der vorstehenden Ansprüche, bei dem
die Information eine Kapazitätsanforderung beinhaltet.

6. Verfahren nach Anspruch 5, bei dem
mit der Kapazitätsanforderung eine Prioritätsinformation übermittelt wird.

7. Verfahren nach Anspruch 5 oder 6, bei dem die
Kapazitätsanforderungen über andere Stationen (WT) weitergeleitet wird.

8. Verfahren nach einem der vorstehenden Ansprüche 5 bis 7, bei dem
die Kapazitätsanforderung von der Wahl unterschiedlicher Dienste mit unterschiedlichen Dienstegüteanforderungen abhängt, die sich das gemeinsame Übertragungsmedium teilen.

9. Verfahren nach einem der vorstehenden Ansprüche 5 bis 8, bei dem
die Kapazitätsanforderung von der Wahl unterschiedlicher Dienste mit unterschiedlichen Dienstegüteanforderungen abhängt, bei denen eine dezentral organisierte, messende dynamische Kanalvergabe verwendet wird.

10. Station für ein Funkkommunikationssystem, bei dem
sich mehrere Stationen (WT, AP, APTi) das gemeinsame Übertragungsmedium teilen,
mit Mitteln zum Versenden von zu mindestens einer Information zum Informieren von wenigstens einer benachbarten Station außerhalb der eigenen Zelle (Z) über ihre Kapazitätsbedürfnisse.

## Claims

1. Method for the accessing by stations (WT, AP, APTi) of a common transmission medium in a radio communication system, wherein the stations (WT, AP, APTi) share the common transmission medium with other stations, **characterised in that** one of the stations (WT, AP, APTi), when required, informs at least one neighbouring station outside its own cell (Z) about its capacity requirements by sending at least one item of information.

2. Method according to claim 1, wherein
the information is received and/or forwarded by stations (WT, AP, APTi) embodied as user-side stations (WT) or network-side stations (AP, APT).

3. Method according to claim 1 or 2, wherein
a station (APT2) with releasable capacity releases a transmission channel.

4. Method according to a preceding claim, wherein
a capacity-requesting station (APT3) continuously monitors the capacity status on the transmission medium and/or receives notification of capacity release from the releasing station (APT2).

5. Method according to one of the preceding claims, wherein
the information contains a capacity request.

6. Method according to claim 5, wherein
priority information is transmitted along with the capacity request.

7. Method according to claim 5 or 6, wherein
the capacity request is forwarded via other stations (WT).

8. Method according to one of the preceding claims 5 to 7, wherein
the capacity request depends on the choice of different services with different quality-of-service requirements, which services share the common transmission medium.

9. Method according to one of the preceding claims 5 to 8, wherein
the capacity request depends on the choice of different services with different quality-of-service requirements for which use is made of measuring, dynamic channel assignment organised on a decentralised basis.

10. Station for a radio communication system, wherein
several stations (WT, AP, APTi) share the common transmission medium,
having means for sending at least one item of information for informing at least one neighbouring station outside their own cell (Z) about their capacity requirements.

## Revendications

1. Procédé permettant l'accès de stations (WT, AP, APTi) à un support de transmission commun dans un système de radiocommunication, les stations (WT, AP, APTi) partageant le support de transmission commun avec d'autres stations, **caractérisé en ce qu'**une des stations (WT, AP, APTi) informe, en cas de besoin, au moins une station voisine située à l'extérieur de sa propre cellule (Z) de ses besoins en capacité par l'envoi d'au moins une information.

2. Procédé selon la revendication 1, dans lequel l'information est reçue et/ou transmise par des stations (WT, AP, APTi) qui sont exécutées en tant que stations (WT) situées côté abonné ou stations (AP, APT). situées côté réseau.

3. Procédé selon la revendication 1 ou 2, dans lequel une station (APT2) qui dispose d'une capacité pouvant être libérée libère un canal de transmission.

4. Procédé selon une des revendications précédentes, dans lequel une station (APT3) demandeuse de capacité surveille en continu l'état de la capacité sur le support de transmission et/ou est informée de la libération d'une capacité par la station (APT2) qui libère cette capacité.

5. Procédé selon une des revendications précédentes, dans lequel l'information contient une demande de capacité.

6. Procédé selon la revendication 5, dans lequel une information de priorité est transmise avec la demande de capacité.

7. Procédé selon la revendication 5 ou 6, dans lequel les demandes de capacité sont transmises par le biais d'autres stations (WT).

8. Procédé selon une des revendications précédentes 5 à 7, dans lequel la demande de capacité dépend du choix de différents services ayant des exigences différentes en matière de qualité de service et qui partagent le support de transmission commun.

9. Procédé selon une des revendications précédentes 5 à 8, dans lequel la demande de capacité dépend du choix de différents services ayant des exigences différentes en matière de qualité de service et pour lesquels on utilise une attribution des canaux dynamique mesurante et organisée de manière décentralisée.

10. Station pour un système de radiocommunication dans lequel plusieurs stations (WT, AP, APTi) partagent le support de transmission commun, comprenant des moyens pour envoyer au moins une information destinée à informer au moins une station voisine située à l'extérieur de sa propre cellule (Z) de ses besoins en capacité.
